# EUROPÄISCHE PATENTSCHRIFT

(11) **EP 2 663 442 B1**
(45) Veröffentlichungstag und Bekanntmachung des Hinweises auf die Patenterteilung: **11.05.2016**
(21) Anmeldenummer: 12700006.5
(22) Anmeldetag: 02.01.2012
(51) Int. Cl.: B29C 45/28, B29C 45/17, B29C 45/03

(54) **SPRITZGIEßMASCHINE**
INJECTION-MOULDING MACHINE
DISPOSITIF DE MOULAGE PAR INJECTION

(30) Priorität: 12.01.2011 DE 102011002585
(43) Veröffentlichungstag der Anmeldung: 20.11.2013
(73) Patentinhaber: MHT Mold & Hotrunner Technology AG, 65239 Hochheim am Main (DE)
(72) Erfinder: SCHWEININGER, Stefan, 65197 Wiesbaden (DE); WAGNER, Christian, 55126 Mainz (DE)
(74) Vertreter: WSL Patentanwälte Partnerschaft mbB
(86) Internationale Anmeldenummer: PCT/EP2012/050007
(87) Internationale Veröffentlichungsnummer: WO 2012/095326

(56) Entgegenhaltungen:
- WO-A1-00/74920
- WO-A1-2009/052611
- WO-A1-2011/161590
- DE-A1-102005 046 770
- DE-U1- 20 118 609
- JP-A- 2008 213 154
- US-A- 4 173 448

## Beschreibung

Die vorliegende Erfindung betrifft eine Spritzgießmaschine mit einem Heißkanal zur Zuführung einer plastifizierten Schmelze in ein Formwerkzeug. Hierbei ist eine Verschlussnadel zum wahlweisen Verschließen oder Öffnen des Heißkanals vorgesehen, wobei die Verschlussnadel mit einem Kolben verbunden ist, der in einem Gehäuse mit einer Öffnung angeordnet ist und beidseits mit einem Fluid beaufschlagbar ist. Mit Hilfe des Fluids kann der Kolben und daher auch die mit dem Kolben verbundene Verschlußnadel innerhalb des Gehäuses bewegt werden, um den Heißkanal gegenüber dem Formwerkzeug zu verschließen oder zu öffnen.

Weiterhin ist eine Abdeckplatte vorgesehen, die zwei Fluidzuführungen hat, über die das Fluid zur Beaufschlagung des Kolbens in die Öffnung des Gehäuses zugeführt wird. Die Abdeckplatte verschließt die Öffnung des Gehäuses. Eine solche Spritzgießmaschine ist beispielsweise in der US 4,173,448 beschrieben.

Bei der gezeigten Ausführungsform weist die Abdeckplatte Ausnehmungen auf, in die das Gehäuse hineinragt, so dass das Gehäuse zum Teil innerhalb der Ausnehmung angeordnet ist.

Da durch den Heißkanal die im allgemeinen erhitzte plastifizierte Schmelze zugeführt wird, und der Heißkanal in einem Heißkanalverteiler angeordnet ist, welcher aufgrund einer Vielzahl von darin angeordneten mit jeweils einem Kolben verbundenen Verschlussnadeln eine erhebliche Ausdehnung besitzt, verändert sich bei der Inbetriebnahme der Spritzgießmaschine die exakte Position der Verschlussnadel relativ zu der Abdeckplatte aufgrund der mit der Temperaturerhöhung verbundenen thermischen Ausdehnung von Verschlussnadel und Heißkanalverteiler. Daher sind Abdeckplatte, Heißkanalverteiter und Gehäuse derart angeordnet, dass bei einer ersten Temperatur des Heißkanalverteilers, in der Regel der Raumtemperatur, zwischen dem Gehäuse und der Abdeckplatte ein Abstand verbleibt und bei einer zweiten Temperatur des Heißkanalverteilers - in der Regel der Betriebstemperatur -, die höher als die erste Temperatur ist, das Gehäuse aufgrund der thermischen Ausdehnung von Heißkanalverteiler und/oder Gehäuse derart mit der Abdeckplatte in Kontakt tritt, dass die Abdeckplatte die Öffnung des Gehäuses verschließt. Mit anderen Worten wird im Betrieb aufgrund der thermischen Ausdehnung des Gehäuses und der Abdeckplatte das Gehäuse mit seiner an der Stirnseite angebrachten Öffnung gegen die Abdeckplatte gepresst, so dass die Abdeckplatte das Gehäuse verschließt. Dabei muss großer Wert darauf gelegt werden, dass die Fluidzuführungen, die in der Abdeckplatte angeordnet sind, mit entsprechenden Fluidkanälen im Gehäuse fluchten, um sicherzustellen, dass bei Bedarf das Fluid beidseitig mit dem Kolben in Kontakt gebracht werden kann. Diese Ausführungsform hat den Nachteil, dass im kalten Zustand die Abdeckplatte nicht mit dem Gehäuse in Kontakt tritt und daher eine Steuerung des Kolbens und damit der Verschlussnadel über das Fluid nicht möglich ist.

Die Spritzgießmaschine kann daher erst dann in Betrieb genommen werden, wenn der Heißkanalverteiler und das daran befestigte Gehäuse seine Betriebstemperatur eingenommen hat, da erst dann die Gehäuseöffnung von der Abdeckplatte verschlossen wird und über die Abdeckplatte Fluid zugeführt werden kann.

Um auch bei niedrigeren Temperaturen des Heißkanalverteilers eine Steuerungsfunktion zu ermöglichen, ist daher bereits versucht worden, Gehäuse und Abdeckplatte derart anzuordnen, dass bereits bei einer Temperatur des Heißkanalverteilers, die deutlich unterhalb der Betriebstemperatur liegt, eine Berührung zwischen Gehäuse und Abdeckplatte stattfindet, so dass bereits bei dieser niedrigeren Temperatur eine Steuerung der Verschlussnadel erfolgen kann. Da der Heißkanalverteiler sich jedoch bis zum Erreichen der Betriebstemperatur weiter ausdehnt, führt dies zu erheblichen Kräften, die Abdeckplatte und Gehäuse aufeinander ausüben, was unter Umständen zu einer Verkippung oder Verkantung des Gehäuses führen kann, wodurch die Funktion der Verschlussnadel beeinträchtigt werden kann.

Da der Heißkanalverteiler üblicherweise eine Mehrzahl von Verschlussnadeln aufweist, die jeweils eine Öffnung des Heißkanals zu einem Formwerkzeug verschließen oder öffnen, ist die Ausdehnung des Heißkanalverteilers senkrecht zur Verschlussnadel nicht zu vernachlässigen. Dies bedeutet, dass sich Gehäuse und Abdeckplatte aufgrund der Erwärmung des Gehäuses wegen des direkten Kontakts mit dem Heißkanalverteiler bis zum Erreichen der Betriebstemperatur relativ zueinander senkrecht zur Nadelachse bewegen.

Wird jedoch, wie eingangs vorgeschlagen, bereits ein metallischer Kontakt zwischen Gehäuse einerseits und Abdeckplatte andererseits bei einer Temperatur erzielt, die deutlich unter der Betriebstemperatur des Heißkanalverteilers liegt, so führt die weitere Erwärmung des Heißkanalverteilers zu einer Verbiegung des Gehäuses.

Eine andere Ausführungsform zeigt die US 6,343,925. Die WO 2009/052611 beschreibt eine Spritzgießvorrichtung, bei der zwischen Gehäuse und Abdeckplatte eine Druckscheibe angeordnet ist.

Ausgehend von dem beschriebenen Stand der Technik ist es daher Aufgabe der vorliegenden Erfindung, eine Spritzgießmaschine der eingangs genannten Art zur Verfügung zu stellen, die bereits bei Temperaturen des Heißkanalverteilers unterhalb der Betriebstemperatur ein sicheres Betätigen der Verschlussnadel erlaubt, zudem jedoch eine Relativbewegung der Abdeckplatte und des Gehäuses in einer Richtung senkrecht zur Nadelachse ohne Verformung des Gehäuses erlaubt, und wobei die von dem Gehäuse auf die Abdeckplatte aufgebrachte Kraft gegenüber den Ausführungsformen des Standes der Technik reduziert werden kann.

Erfindungsgemäß wird diese Aufgabe dadurch gelöst, dass zwischen Gehäuse und Abdeckplatte eine flexible Dichtung vorgesehen ist, die derart ausgestaltet ist, dass die Abdeckplatte die Öffnung des Gehäuses in einer Position verschließt, in der Abdeckplatte und Gehäuse voneinander beabstandet sind und das Gehäuse ein abnehmbares Adapterelement aufweist, welches eine Fluideinlassöffnung und eine Fluidauslassöffnung hat, die derart angeordnet sind, dass das von er Abdeckplatte bereitgestellte Fluid über die Fluideinlassöffnung in das Adapterelement und über die Fluidauslassöffnung von dem Adapterelement in das Gehäuse gefürht wird.

Mit anderen Worten sorgt die flexible Dichtung dafür, dass die Gehäuseöffnung durch die Abdeckplatte verschlossen werden kann, obgleich sich bei weiterer Erwärmung des Heißkanalverteilers und des Gehäuses der Abstand zwischen Gehäuse und Abdeckplatte noch verringert.

Die flexible Dichtung lässt auch eine Relativbewegung zwischen Abdeckplatte einerseits und Gehäuse andererseits senkrecht zur Nadelachse zu, da im begrenzten Maße eine Gleitbewegung der flexiblen Dichtung auf der Abdeckplattenfläche bzw. auf der Gehäusestirnseite möglich ist. Dabei ist jedoch darauf zu achten, dass die Fluidübergabe zwischen Abdeckplatte und Gehäuse nicht unterbrochen wird.

In einer bevorzugten Ausführungsform weist das Gehäuse und/oder die Abdeckplatte eine entsprechende Nut auf, in die die flexible Dichtung, z. B. ein O-Ring, eingelegt werden kann. Dabei sind flexible Dichtung und Nut am besten derart ausgebildet, dass bei Erreichen der Betriebstemperatur das Gehäuse direkt mit der Abdeckplatte in Kontakt tritt, so dass in dieser Situation die flexible Dichtung keine Dichtfunktion mehr wahrnehmen muss.

In einer bevorzugten Ausführungsform ist vorgesehen, dass zwei flexible Dichtungen zwischen Gehäuse und Abdeckplatte vorgesehen sind, wobei die beiden flexiblen Dichtungen derart angeordnet sind, dass über die erste Fluidzuführung der Abdeckplatte Fluid nur zu der ersten Seite des Kolbens und über die zweite Fluidzuführung der Abdeckplatte Fluid nur zu der zweiten Seite des Kolbens zugeführt werden kann.

Mit anderen Worten sind die beiden flexiblen Dichtungen derart angeordnet, dass die erste und die zweite Fluidzuführung der Abdeckplatte durch eine der flexiblen Dichtungen voneinander getrennt sind.

Beispielsweise können die flexiblen Dichtungen durch zwei konzentrisch zueinander angeordnete O-Ringe gebildet werden. Die erste Fluidzuführung der Abdeckplatte ist dann beispielsweise derart angeordnet, dass die Fluidzuführung innerhalb des inneren O-Rings erfolgt, während die zweite Fluidzuführung so angeordnet ist, dass die Fluidzuführung zwischen dem inneren O-Ring und dem äußeren O-Ring erfolgt.

In einer bevorzugten Ausführungsform ist das Adapterelement zumindest teilweise, vorzugsweise vollständig im Gehäuse angeordnet. Zweckmäßigerweise sind die flexiblen Dichtungen an bzw. in dem Adapterelement angeordnet. Durch das Adapterelement kann eine bessere Anpassung des Gehäuses an die Fluidausläße der Abdeckplatte erfolgen, wodurch die Fluidübergabe auch bei einer Relativbewegung zwischen Gehäuse und Abdeckplatte senkrecht zur Achse der Verschlußnadel gewährleistet ist.

In einer weiteren bevorzugten Ausführungsform ist vorgesehen, dass das Adapterelement und das Gehäuse zueinander korrespondierende Anschlagflächen aufweisen, die bei dem in das Gehäuse eingesetzten Zustand des Adapterelements miteinander in Kontakt treten. Durch diese Anschlagsflächen kann das Adapterelement leicht exakt innerhalb des Gehäuses positioniert werden, wobei zugleich sichergestellt ist, dass die mit Fluid befüllbaren Kammern, die sich beidseits des Kolbens ausbilden, die richtige wirksame Kolbenfläche haben.

Es ist weiterhin zweckmäßig, wenn das Adapterelement eine Kolbenanschlagsfläche aufweist, die derart angeordnet ist, dass der Kolben in einer seiner Maximalpositionen an der Kolbenanschlagsfläche anliegt. Durch das Beaufschlagen der beiden Seiten des Kolbens mit dem Fluid wird der Kolben innerhalb des Gehäuses hin und her bewegt, wodurch die Verschlussnadel von der geöffneten Position in die geschlossene Position bewegt werden kann. Durch die Kolbenanschlagsfläche ist sichergestellt, dass auch in der Kolbenposition, in der der Kolben dem Adapterelement am nächsten angeordnet ist, genügend Raum zwischen Kolben einerseits und Adapterelement bzw. Abdeckplatte andererseits verbleibt, so dass die effektive Fläche, die mit dem Fluid beaufschlagt werden kann, ein Mindestmaß nicht unterschreitet.

In einer weiteren bevorzugten Ausführungsform ist vorgesehen, dass sich Fluideinlassöffnung und Fluidauslassöffnung des Adapterelementes in ihrem Querschnitt unterscheiden und/oder von der Achse der Verschlussnadel unterschiedlich weit entfernt sind.

Mit anderen Worten dient das Adapterelement in diesem Fall der Anpassung der Fluidauslassöffnungen der Abdeckplatte an die entsprechenden Fluideinlasspositionen des Gehäuses.

In einer weiteren bevorzugten Ausführungsform ist vorgesehen, dass die Fluidauslassöffnung des Adapterelements in der Anschlagsfläche angeordnet ist, und dass das Gehäuse einen Fluidkanal aufweist, dessen eines Ende in der Anschlagsfläche des Gehäuses angeordnet ist.

Durch diese Maßnahme ist eine effektive Weiterleitung des Fluids von der Abdeckplatte in den der Abdeckplatte abgewandten Funktionsraum des Kolbens möglich.

Weitere Vorteile, Merkmale und Anwendungsmöglichkeiten der vorliegenden Erfindung werden deutlich anhand der folgenden Beschreibung einiger bevorzugter Ausführungsformen sowie der zugehörigen Figuren. Es zeigen:
Fig. 1 eine Gegenüberstellung einer Ausführungsform des Standes der Technik sowie einer ersten Ausführungsform der Erfindung,
Fig. 2 eine Schnittansicht des Kolbengehäuses mit eingesetztem Kolben der Ausführungsform des Standes der Technik,
Fig. 3 eine Explosionsansicht der ersten Ausführungsform der Erfindung,
Fig. 4a bis 4c unterschiedliche Ansichten einer zweiten Ausführungsform der Erfindung,
Fig. 5a bis 5c unterschiedliche Ansichten einer dritten Ausführungsform der Erfindung und
Fig. 6 eine Schnittansicht einer vierten Ausführungsform der Erfindung.

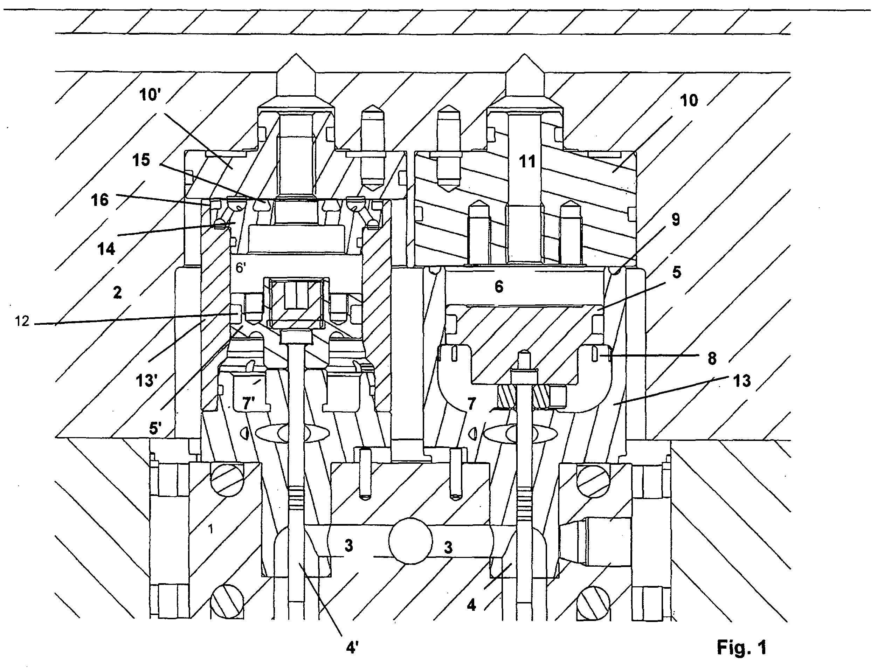

Fig. 1 zeigt eine Schnittansicht durch zwei nebeneinander angeordnete Kolbengehäuse, wobei die in Fig. 1 rechts angeordnete Ausführungsform eine Ausführungsform des Standes der Technik ist, während die in Fig. 1 links angeordnete Ausführungsform eine erste Ausführungsform der Erfindung ist.

Die in Fig. 1 rechts gezeigte Ausführungsform weist der Heißkanalverteiler 1 mit einem Zuführungskanal 3 für plastifizierte Schmelze auf. Über diesen Kanal wird die plastifizierte Schmelze in das Formwerkzeug zugeführt. Der Einlass in das Formwerkzeug kann mit Hilfe der Verschlussnadel 4 verschlossen werden oder geöffnet werden. Zur Bewegung der Verschlussnadel 4 ist diese mit einem Kolben 5 verbunden, der innerhalb eines Gehäuses 13 angeordnet ist. Das Gehäuse 13 ist nach oben hin offen und wird durch ein Abdeckelement 10, welches mit der Abdeckplatte 2 verbunden ist, verschlossen. Der Kolben 5 teilt den innerhalb des Gehäuses 13 befindlichen Raum in zwei Teilräume 6, 7, die beide wahlweise mit einem Fluid beaufschlagt, d.h. gegebenenfalls unter Druck gesetzt werden können.

Wird beispielsweise über den Zuführungskanal 11 Fluid in das Gehäuse 13 eingebracht, so vergrößert sich der Druck im Teilraum 6, so dass sich der Kolben 5 in die in Fig. 1 rechts gezeigte Position bewegt. In dieser Position verschließt die Verschlussnadel 4 den Zugang zu dem Formwerkzeug. Um den Kolben 5 nach oben zu bewegen und damit die Verschlussnadel in die geöffnete Position zu bewegen, muss über das Abdeckelement 10 Fluid über den Fluideinlass 9 in das Gehäuse 13 eingebracht werden. Der Fluideinlass 9 des Gehäuses 13 ist über einen Kanal innerhalb der Wand (in der Figur nicht zu sehen) mit dem Fluidauslass 8 verbunden, der sich innerhalb des unteren Teilraums 7 befindet. Wird daher Fluid über diesen Fluidkanal zugeführt, so erhöht sich der Druck im unteren Teilraum 7, und der Kolben 5 bewegt sich in Fig. 1 nach oben, wodurch sich der Teilraum 6 verkleinert, bis der Kolben 5 an dem Abdeckelement 10 anliegt.

In dem gezeigten Werkzeug herrschen im Betriebszustand extreme Temperaturunterschiede. Während der Heißkanalverteiler 1, in der die plastifizierte erhitzte Schmelze zugeführt wird, bei hoher Temperatur (> 250°C) arbeitet, ist die Abdeckplatte 2 in der Regel gekühlt und daher bei deutlich niedrigerer Temperatur (∼ 20°C).

Durch die hohen Temperaturunterschiede ist die thermische Ausdehnung der einzelnen Elemente zu berücksichtigen. Das Gehäuse 13 ist daher derart dimensioniert, dass es im kalten Zustand, d.h., wenn der Heißkanalverteiler 1 und das Gehäuse 13 noch nicht auf Betriebstemperatur sind, nicht mit dem Abdeckelement 10 in Kontakt tritt. In dieser Situation kann das Abdeckelement 10 somit das Gehäuse 13 nicht verschließen, und die Verschlussnadel 4 kann nicht über die Fluidzufuhr gesteuert werden. Vor Beginn des Spritzvorgangs muss daher der Heißkanalverteiler 1 erwärmt werden. Dadurch dehnt sich das Material aus und der Spalt zwischen Gehäuse 13 einerseits und Abdeckelement 10 andererseits verkleinert sich, bis das Gehäuse 13 auf dem Abdeckelement 10 aufsetzt und gegen dieses gepresst wird. Dadurch wird die Öffnung des Gehäuses 13 durch das Abdeckelement 10 verschlossen. In diesem Zustand kann über geeignete Fluidsteuerung über das Abdeckelement 10 der Kolben 5 und damit die Verschlussnadel 4 gesteuert werden.

Um bereits bei Temperaturen, die unterhalb der Endbetriebstemperatur liegen, eine Steuerung der Verschlussnadel 4 zu erlauben, ist das Gehäuse 13 derart ausgelegt, dass es bereits bei einer Temperatur, die deutlich unter der Betriebstemperatur liegt, mit dem Abdeckelement 10 in Kontakt tritt. Bei weiterer Erwärmung des Heißkanalverteilers 1 auf die Betriebstemperatur wird daher das Gehäuse 13 mit großer Kraft gegen das Abdeckelement 10 gepresst. Es müssen daher erhebliche Kräfte abgefangen werden.

Da meist eine ganze Reihe von Verschlussnadeln innerhalb des Heißkanalverteilers 1 nebeneinander angeordnet sind, spielt auch die Ausdehnung des Heißkanalverteiler 1 in Querrichtung, d.h. quer zur Verschlussnadelachse, eine Rolle, so dass es unter Umständen zu Verbiegungen des Gehäuses 13 kommen kann, wenn das Gehäuse 13 bereits mit dem Abdeckelement 10 in Kontakt getreten ist und aufgrund einer weiteren Erwärmung des Heißkanalverteilers 1 es zu einer Relativbewegung zwischen Gehäuse 13 und Abdeckelement 10 kommt.

In der in Fig. 1 links gezeigten Ansicht ist eine erste Ausführungsform der Erfindung gezeigt. Auch hier wird ein Kolben 5', der mit einer Verschlussnadel 4' verbunden ist, innerhalb eines Gehäuses 13' geführt, der den Hohlraum innerhalb des Gehäuses 13' in zwei Teilräume 6' und 7' unterteilt. Zur Abdichtung der beiden Teilräume weist der Kolben eine umlaufende Nut 12 auf, in die eine Dichtung eingelegt werden kann.

Jeder der beiden Teilräume 6' und 7' kann wahlweise mit einem Fluid beaufschlagt werden, d.h. unter Druck gesetzt werden, um eine Bewegung des Kolbens 5' innerhalb des Gehäuses 13' nach oben bzw. nach unten zu bewirken, um damit die Verschlussnadel 4' von ihrer offenen Position in die geschlossene Position und zurück zu bewegen.

Das Gehäuse 13' weist hier ein Adapterelement 14 auf, welches die Öffnung des Gehäuses 13' teilweise verschließt. Dieses Adapterelement 14 weist eine innere im Wesentlichen kreisförmige Nut 15 und eine äußere im Wesentlichen kreisförmige Nut 16 auf. In diese Nuten ist eine flexible Dichtung, im vorliegenden Fall ein O-Ring, eingelegt (nicht gezeigt). Diese Dichtung steht über der dem Kolben 5' abgewandten Seite des Adapterelements 14 vor, so dass sie eine Abdichtung zwischen Adapterelement 14 einerseits und Abdeckelement 10' andererseits bereitstellt, selbst wenn sich Adapterelement 14 und Abdeckelement 10' noch nicht berühren. Durch diese Maßnahme wird daher bei Temperaturen, die deutlich unterhalb der Betriebstemperatur liegen, bereits eine Abdichtung zwischen Gehäuse und Abdeckelement bereitgestellt, so dass eine effektive Steuerung der Verschlussnadel 4' möglich ist. Spätestens dann, wenn die Betriebstemperatur des Heißkanalverteilers 1 erreicht ist, hat sich das Gehäuse 13' so ausgedehnt, dass es mit dem Abdeckelement 10' in Kontakt tritt. In dieser Situation, die in Fig. 1 gezeigt ist, tragen die flexiblen Dichtungen, die in die Nuten 15 und 16 eingelegt sind, nicht mehr zur Dichtfunktion bei.

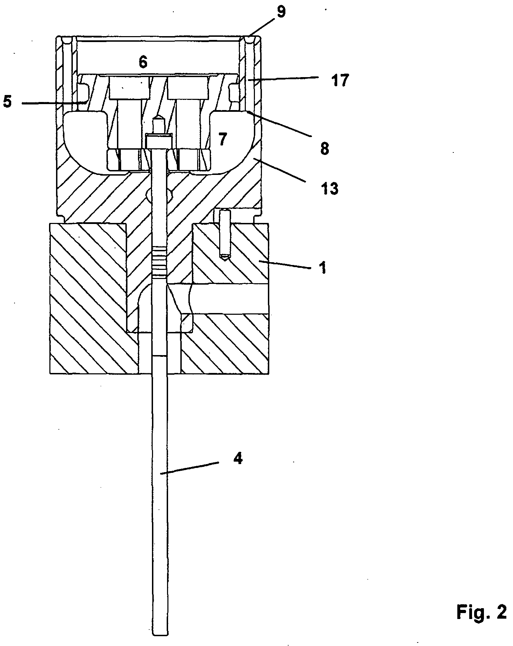

In Fig. 2 ist eine weitere Schnittansicht der Ausführungsform des Standes der Technik zu sehen. Bei dieser Darstellung ist der Kanal 17, der den Fluideinlass 9 mit dem Fluidauslass 8 verbindet, deutlich zu erkennen. Über diesen Fluidkanal 17 kann das Fluid in die untere Kammer 7 geleitet werden, um diese Kammer unter Druck zu setzen und den Kolben 5 nach oben zu bewegen.

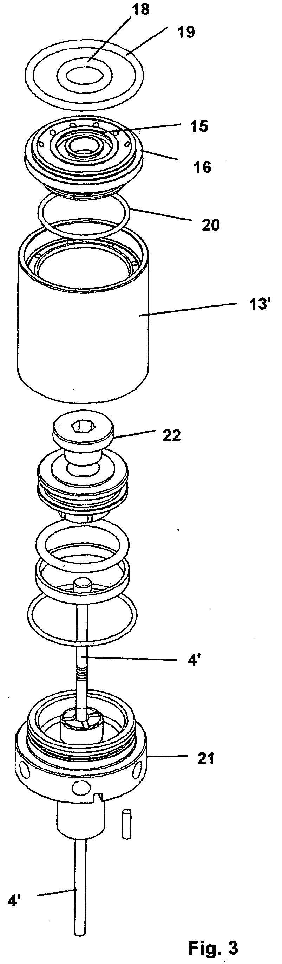

In Fig. 3 ist eine Explosionsansicht der ersten Ausführungsform der Erfindung gezeigt. Deutlich zu erkennen sind die konzentrisch angeordneten O-Ring-Dichtungen 18 und 19, die in die entsprechenden Nuten 15 und 16 des Adapterelements 14 eingelegt werden. Das Adapterelement 14 ist mit Hilfe der O-Ring-Dichtung 20 gegenüber dem Gehäuse 13' abgedichtet.

Das Gehäuse 13' weist einen Boden 21 auf, in dem die Verschlussnadel 4' mit der Schraube 22 fixiert ist.

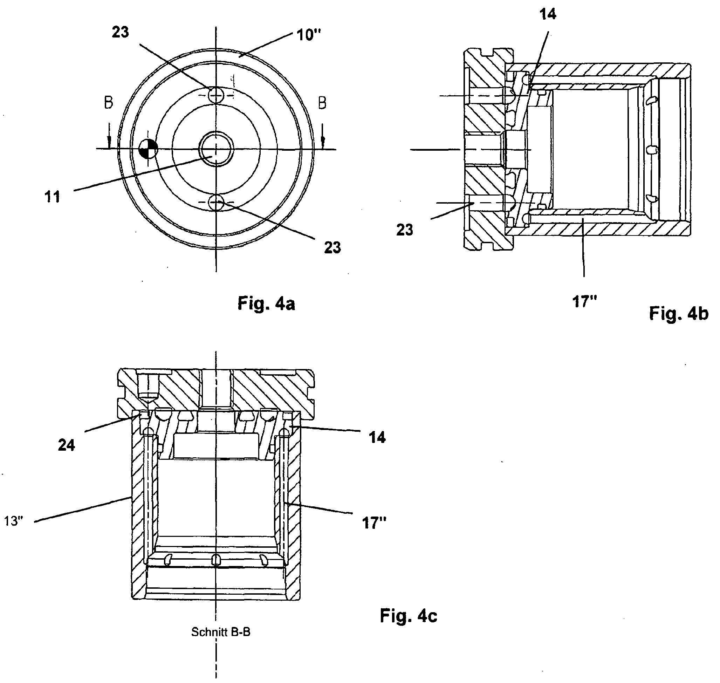

In den Figuren 4a bis 4c sind drei Ansichten einer zweiten Ausführungsform der Erfindung gezeigt. Fig. 4a zeigt eine Draufsicht von oben auf das Abdeckelement 10", das oberhalb des Kolbengehäuses angeordnet ist. Das Abdeckelement 10" weist eine zentrale Fluidzuführung 11 sowie zwei dezentrale Fluidzuführungen 23 auf. Wie insbesondere in der Schnittansicht von Fig. 4b zu erkennen ist, können bei der erfindungsgemäßen Ausführungsform die äußeren Fluidzuführungen 23 mit einem größeren Querschnitt ausgeführt werden als die entsprechenden Fluidkanäle 17" im Gehäuse 13". Mit Hilfe des Adapterelements 14 wird daher der Fluidstrom, der über die Kanäle 23 zugeführt wird, zum einen axial nach außen in den Kanal 17" geführt, und zum anderen wird der Querschnitt verjüngt. Bei der in den Figuren 4a bis 4c gezeigten zweiten Ausführungsform weist das Abdeckelement 10" einen ringförmigen Wulst 24 auf, der in entsprechende Ausnehmungen des Adapterelements 14 eingreift, um die radiale Position (in Bezug auf die Verschlussnadelachse) des Gehäuses in Bezug auf das Abdeckelement 10" festzulegen.

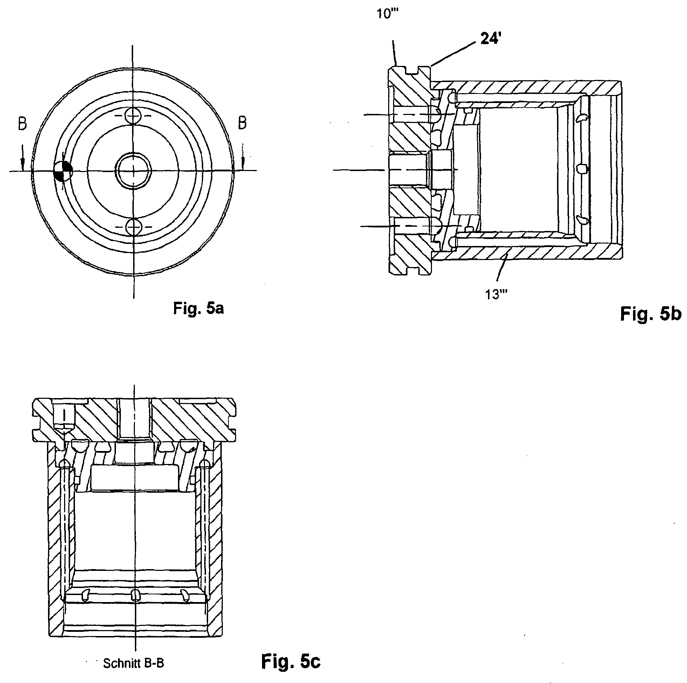

In den Figuren 5a bis 5c ist eine dritte Ausführungsform der Erfindung gezeigt. Hier ist der ringförmige Wulst 24' des Abdeckelements 10'" derart angebracht, dass es das Gehäuse 13'" umgreift.

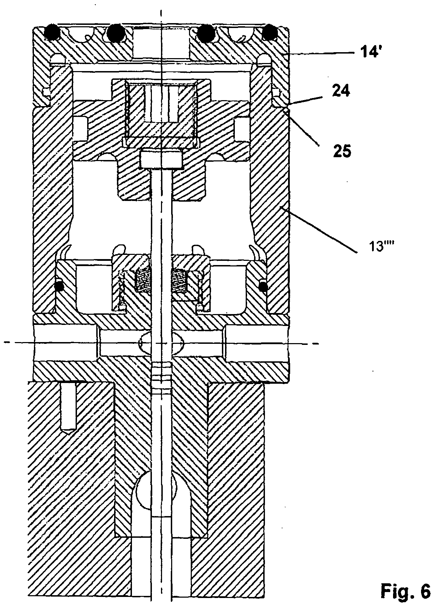

Schließlich ist in Fig. 6 eine vierte Ausführungsform der Erfindung gezeigt. Hier umgreift das Adapterelement 14' das Gehäuse 13"", das in dem dem Adapterelement 14' zugewandten Ende einen verjüngten Außendurchmesser aufweist. Das Adapterelement 14' weist an seiner dem Gehäuse 13"" zugewandten Ende eine Anschlagsfläche 24 auf. Auch das Gehäuse 13'" weist an dem dem Adapterelement 14' zugewandten Ende eine korrespondierende Anschlagsfläche 25 auf. Durch diese Anschlagsfläche wird das Adapterelement 14' exakt relativ zu dem Gehäuse 13"" positioniert.

### Bezuctszeichenliste

- 1: Heißkanalverteiler
- 2: Abdeckplatte
- 3: Zuführungskanal
- 4, 4': Verschlussnadel
- 5, 5': Kolben
- 6, 7, 6', 7': Teilraum, Kammer
- 8: Fluidauslass
- 9: Fluideinlass
- 10, 10', 10": Abdeckelement
- 11: Zuführungskanal
- 12: Nut
- 13, 13', 13", 13"': Gehäuse
- 14, 14': Adapterelement
- 15: Nut
- 16: Nut
- 17, 17': Fluidkanäle
- 18: O-Ring-Dichtung
- 19: O-Ring-Dichtung
- 20: O-Ring-Dichtung
- 21: Boden
- 22: Schraube
- 23: Fluidzuführung
- 24, 24': ringförmiger Wulst, Anschlagsfläche
- 25: Anschlagsfläche

## Patentansprüche

1. Spritzgießmaschine mit einem in einem Heißkanalverteiler (1) angeordneten Heißkanal zur Zuführung einer plastifizierten Schmelze in ein Formwerkzeug, einer Verschlussnadel (4, 4') zum wahlweisen Verschließen oder Öffnen des Heißkanals, einem mit der Verschlussnadel (4, 4') verbundenen Kolben (5, 5'), der in einem Gehäuse (13,13', 13", 13'") mit einer Öffnung angeordnet ist und beidseitig mit einem Fluid beaufschlagbar ist, und einer Abdeckplatte (2) mit zwei Fluidzuführungen (23), über die das Fluid zur Beaufschlagung des Kolbens (5, 5') in die Öffnung des Gehäuses (13, 13', 13", 13"') zugeführt wird, wobei Abdeckplatte (2), Heißkanalverteiler (1) und Gehäuse (13, 13', 13", 13"') derart angeordnet sind, dass bei einer ersten Temperatur des Heißkanalverteilers (1) zwischen dem Gehäuse (13, 13', 13", 13"") und der Abdeckplatte (2) ein Abstand verbleibt und bei einer zweiten Temperatur des Heißkanalverteilers (1), die höher als die erste Temperatur ist, das Gehäuse (13, 13', 13", 13"') aufgrund der thermischen Ausdehnung von Heißkanalverteiler (1) und/oder Gehäuse (13, 13', 13", 13'") derart mit der Abdeckplatte (2) in Kontakt tritt, dass die Abdeckplatte (2) die Öffnung des Gehäuses (13, 13', 13", 13"') verschließt, **dadurch gekennzeichnet, dass** zwischen Gehäuse (13, 13', 13", 13"") und Abdeckplatte (2) eine flexible Dichtung vorgesehen ist, die derart ausgestaltet ist, dass die Abdeckplatte (2) die Öffnung des Gehäuses (13, 13', 13", 13"') in einer Position verschließt, in der Abdeckplatte (2) und Gehäuse (13, 13', 13", 13"') voneinander beabstandet sind und das Gehäuse (13, 13', 13", 13"') ein abnehmbares Adapterelement (14, 14') aufweist, welches eine Fluideinlassöffnung (9) und eine Fluidauslassöffnung (8) hat, die derart angeordnet sind, dass das von der Abdeckplatte (2) bereitgestellte Fluid über die Fluideinlassöffnung (9) in das Adapterelement (14, 14') und über die Fluidauslassöffnung (8) von dem Adapterelement (14, 14') in das Gehäuse (13, 13', 13", 13"') geführt wird.

2. Spritzgießmaschine nach Anspruch 1, **dadurch gekennzeichnet, dass** zwei flexible Dichtungen zwischen Gehäuse (13, 13', 13", 13"') und Abdeckplatte (2) vorgesehen sind, wobei die beiden flexiblen Dichtungen derart angeordnet sind, dass über die erste Fluidzuführung (23) der Abdeckplatte (2) Fluid nur zu der ersten Seite des Kolbens (5, 5') und über die zweite Fluidzuführung (23) der Abdeckplatte (2) Fluid nur zu der zweiten Seite des Kolbens (5, 5') zugeführt werden kann.

3. Spritzgießmaschine nach Anspruch 2, **dadurch gekennzeichnet, dass** die flexiblen Dichtungen durch zwei konzentrisch zueinander angeordnete O-Ringe gebildet werden.

4. Spritzgießmaschine nach einem der Ansprüche 1 bis 3, **dadurch gekennzeichnet, dass** das Adapterelement (14, 14') zumindest teilweise, vorzugsweise vollständig im Gehäuse (13,13', 13", 13'") angeordnet werden kann.

5. Spritzgießmaschine nach einem der Ansprüche 1 bis 4, **dadurch gekennzeichnet, dass** Adapterelement (14, 14') und Gehäuse (13, 13', 13", 13'") zueinander korrespondierende Anschlagflächen (25) aufweisen, die bei dem in das Gehäuse (13, 13', 13", 13'") eingesetzten Zustand des Adapterelementes (14, 14') miteinander in Kontakt treten.

6. Spritzgießmaschine nach einem der Ansprüche 1 bis 5, **dadurch gekennzeichnet, dass** das Adapterelement (14, 14') eine Kolbenanschlagsfläche aufweist, die derart angeordnet ist, dass der Kolben (5, 5') in einer seiner Maximalpositionen an der Kolbenanschlagsfläche anliegt.

7. Spritzgießmaschine nach einem der Ansprüche 1 bis 6, **dadurch gekennzeichnet, dass** sich Fluideinlassöffnung (9) und Fluidauslassöffnung (8) in ihrem Querschnitt unterscheiden und/oder von der Achse der Verschlussnadel (4, 4') unterschiedlich weit entfernt sind.

8. Spritzgießmaschine nach Anspruch 7 soweit von Anspruch 5 abhängig, **dadurch gekennzeichnet, dass** die Fluidauslassöffnung (8) des Adapterelements (14, 14') in der Anschlagsfläche (25) angeordnet ist, und dass das Gehäuse (13, 13', 13", 13"') einen Fluidkanal (17, 17') aufweist, dessen eines Ende in der Anschlagsfläche (25) des Gehäuses (13, 13', 13", 13'") angeordnet ist.

## Claims

1. Injection-moulding machine with a hot runner arranged in a hot runner manifold (1) for feeding a plasticised melt into a mould, a shut-off needle (4, 4') for optionally closing or opening the hot runner, a piston (5, 5') which is connected to the shut-off needle (4, 4') and arranged in a housing (13, 13', 13", 13"') with an opening and to which a fluid can be applied on both sides, and a covering plate (2) with two fluid feeds (23) through which the fluid to be applied to the piston (5, 5') is fed into the opening of the housing (13, 13', 13", 13'"), the covering plate (2), hot runner manifold (1) and housing (13, 13', 13", 13"') being arranged in such a way that at a first temperature of the hot runner manifold (1) a gap is left between the housing (13, 13', 13", 13"') and the covering plate (2), and at a second temperature of the hot runner manifold (1) which is higher than the first temperature, the housing (13, 13', 13", 13"') comes into contact with the covering plate (2) in such a way that the covering plate (2) closes the opening of the housing (13, 13', 13", 13"') due to the thermal expansion of the hot runner manifold (1) and/or the housing (13, 13', 13", 13''), **characterised in that** a flexible seal is provided between the housing (13, 13', 13", 13"') and the covering plate (2), which seal is configured in such a way that the covering plate (2) closes the opening of the housing (13, 13', 13", 13"') in a position in which the covering plate (2) and the housing (13, 13', 13", 13"') are a distance from one another and that the housing (13, 13', 13", 13"') exhibits a detachable adapter element (14, 14') which has a fluid inlet opening (9) and a fluid outlet opening (8) which are arranged in such a way that the fluid provided by the covering plate (2) is passed through the fluid inlet opening (9) into the adapter element (14, 14') and through the fluid outlet opening (8) of the adapter element (14, 14') into the housing (13, 13', 13", 13'").

2. Injection-moulding machine according to claim 1, **characterised in that** two flexible seals are provided between the housing (13, 13', 13", 13"') and the covering plate (2), the two flexible seals being arranged in such a way that fluid can only be fed to the first side of the piston (5, 5') through the first fluid feed (23) of the covering plate (2) and fluid can only be fed to the second side of the piston (5, 5') through the second fluid feed (23) of the covering plate (2).

3. Injection-moulding machine according to claim 2, **characterised in that** the flexible seals are formed by two O-rings arranged concentrically with one another.

4. Injection-moulding machine according to one of claims 1 to 3, **characterised in that** the adapter element (14, 14') can be arranged at least partly, preferably completely in the housing (13, 13', 13", 13"').

5. Injection-moulding machine according to one of claims 1 to 4, **characterised in that** the adapter element (14, 14') and the housing (13, 13', 13", 13"') exhibit corresponding stop faces (25) which come into contact with one another when the adapter element (14, 14') is inserted in the housing (13, 13', 13", 13'").

6. Injection-moulding machine according to one of claims 1 to 5, **characterised in that** the adapter element (14, 14') exhibits a piston stop face which is arranged in such a way that the piston (5, 5') bears on the piston stop face in one of its maximum positions.

7. Injection-moulding machine according to one of claims 1 to 6, **characterised in that** the fluid inlet opening (9) and the fluid outlet opening (8) differ in their cross-section and/or are different distances from the axis of the shut-off needle (4, 4').

8. Injection-moulding machine according to claim 7 when dependent on claim 5, **characterised in that** the fluid outlet opening (8) of the adapter element (14, 14') is arranged in the stop face (25) and **in that** the housing (13, 13', 13", 13"') exhibits a fluid channel (17, 17') one end of which is arranged in the stop face (25) of the housing (13, 13', 13", 13"').

## Revendications

1. Machine de moulage par injection avec un canal chaud disposé dans un distributeur à canal chaud (1) pour l'acheminement d'une masse fondue plastifiée dans un moule de formage, un pointeau de fermeture (4, 4') pour l'obturation ou l'ouverture au choix du canal chaud, un piston (5, 5'), raccordé au pointeau de fermeture (4, 4'), qui est disposé dans un carter (13, 13', 13", 13"') avec une ouverture et qui peut être exposé des deux côtés à un fluide, et une plaque de couverture (2) avec deux amenées de fluide (23) par le biais desquelles le fluide est acheminé dans l'ouverture du carter (13, 13', 13", 13"') pour agir sur le piston (5, 5'), la plaque de couverture (2), le distributeur à canal chaud (1) et le carter (13, 13', 13", 13"') étant disposés de telle sorte que, à une première température du distributeur à canal chaud (1), il demeure une distance entre le carter (13, 13', 13", 13"') et la plaque de couverture (2) et, à une deuxième température du distributeur à canal chaud (1) qui est supérieure à la première température, le carter (13, 13', 13", 13"') entre en contact avec la plaque de couverture (2) en raison de la dilatation thermique du distributeur à canal chaud (1) et/ou du carter (13, 13', 13", 13"') de telle sorte que la plaque de couverture (2) obture l'ouverture du carter (13, 13', 13", 13"'), **caractérisée en ce que**, entre le carter (13, 13', 13", 13"') et la plaque de couverture (2), il est prévu un joint d'étanchéité flexible qui est constitué de telle sorte que la plaque de couverture (2) obture l'ouverture du carter (13, 13', 13", 13"') dans une position dans laquelle la plaque de couverture (2) et le carter (13, 13', 13", 13"') sont espacés l'une de l'autre et le carter (13, 13', 13", 13"') présente un élément d'adaptation (14, 14') amovible qui a une ouverture d'entrée de fluide (9) et une ouverture de sortie de fluide (8) qui sont disposées de telle sorte que le fluide fourni par la plaque de couverture (2) est conduit dans l'élément d'adaptation (14, 14') par le biais de l'ouverture d'entrée de fluide (9), et depuis l'élément d'adaptation (14, 14') dans le carter (13, 13', 13", 13"') par le biais de l'ouverture de sortie de fluide (8).

2. Machine de moulage par injection selon la revendication 1, **caractérisée en ce que** deux joints d'étanchéité flexibles sont prévus entre le carter (13, 13', 13", 13"') et la plaque de couverture (2), les deux joints d'étanchéité flexibles étant disposés de telle sorte que, par le biais de la première amenée de fluide (23) de la plaque de couverture (2), le fluide ne peut être acheminé qu'au premier côté du piston (5, 5') et, par le biais de la deuxième amenée de fluide (23) de la plaque de couverture (2), le fluide ne peut être acheminé qu'au deuxième côté du piston (5, 5').

3. Machine de moulage par injection selon la revendication 2, **caractérisée en ce que** les joints d'étanchéité flexibles sont formés de deux joints toriques disposés de façon concentrique l'un par rapport à l'autre.

4. Machine de moulage par injection selon l'une des revendications 1 à 3, **caractérisée en ce que** l'élément d'adaptation (14, 14') peut être disposé au moins partiellement, de préférence complètement dans le carter (13, 13', 13", 13"').

5. Machine de moulage par injection selon l'une des revendications 1 à 4, **caractérisée en ce que** l'élément d'adaptation (14, 14') et le carter (13, 13', 13", 13"') présentent des surfaces de butée correspondant entre elles qui entrent en contact les unes avec les autres quand l'élément d'adaptation (14, 14') est introduit dans le carter (13, 13', 13", 13"').

6. Machine de moulage par injection selon l'une des revendications 1 à 5, **caractérisée en ce que** l'élément d'adaptation (14, 14') présente une surface de butée de piston qui est disposée de telle sorte que, dans une de ses positions maximales, le piston (5, 5') est adjacent à la surface de butée de piston.

7. Machine de moulage par injection selon l'une des revendications 1 à 6, **caractérisée en ce que** l'ouverture d'entrée de fluide (9) et l'ouverture de sortie de fluide (8) se distinguent par leur section transversale et/ou présentent un éloignement différent à l'axe du pointeau de fermeture (4, 4').

8. Machine de moulage par injection selon la revendication 7 dans la mesure où elle dépend de la revendication 5, **caractérisée en ce que** l'ouverture de sortie de fluide (8) de l'élément d'adaptation (14, 14') est disposée dans la surface de butée (25) et **en ce que** le carter (13, 13', 13", 13"') présente un canal de fluide (17, 17) dont l'extrémité est disposée dans la surface de butée (25) du carter (13, 13', 13", 13"').
